# EUROPÄISCHE PATENTANMELDUNG

(11) **EP 4 817 845 A1**
(43) Veröffentlichungstag der Anmeldung: **07.10.2026**
(21) Anmeldenummer: 26168776.8
(22) Anmeldetag: 27.03.2026
(51) Int. Cl.: B29C 49/64, B29C 49/42, B29C 49/00, B29C 35/04, B29C 49/58, B29C 49/78

(54) **VERFAHREN ZUM VERFORMEN EINES HOHLKÖRPERS AUS THERMOPLASTISCHEM KUNSTSTOFF UND SYSTEM HIERFÜR**

(30) Priorität: 31.03.2025 LU 600961
(71) Anmelder: BEGA Gantenbrink-Leuchten KG, 58708 Menden (DE)
(72) Erfinder: Gantenbrink, Heinrich, 58708 Menden (DE)
(74) Vertreter: Habermann Intellectual Property Partnerschaft von Patentanwälten mbB

(57) **Zusammenfassung**

Die Erfindung betrifft ein Verfahren zum Verformen eines beidseitig offenen, Hohlkörpers (4) aus thermoplastischem Kunststoff, wobei
a) der Hohlkörper (4) in ein geteiltes, schließbares Werkzeug (1) eingelegt wird, das die Außengeometrie des zu formenden Bauteils vorgibt,
b) die Enden des Hohlkörpers (4) mit einem geschlossenen Prozesssystem verbunden werden,
c) der Hohlkörper (4) in einem ersten Erwärmungsschritt auf eine Temperatur unterhalb einer Plastifizierungstemperatur des Kunststoffs gebracht wird,
d) der Hohlkörper (4) in einem zweiten Erwärmungsschritt auf eine Temperatur oberhalb der Plastifizierungstemperatur des Kunststoffs erhitzt wird,
e) nach erfolgter Plastifizierung der Innendruck im Hohlkörper (4) erhöht wird, sodass sich dieser an die Innenkontur des Werkzeugs (1) anlegt und verformt.

## Beschreibung

Die Erfindung betrifft ein Verfahren zum Verformen eines beidseitig offenen, Hohlkörpers aus thermoplastischem Kunststoff und ein System zur Verformung eines beidseitig offenen Hohlkörpers aus thermoplastischem Kunststoff

Zur Formgebung thermoplastischer Hohlkörper stehen in der industriellen Praxis verschiedene Verfahren zur Verfügung, die sich hinsichtlich Prozessführung, Energiebedarf, Geometrieflexibilität und Bauteilqualität unterscheiden. Besonders etabliert sind das Extrusionsblasformen, das Spritzblasformen sowie das Streckblasformen, bei denen der Hohlkörper durch Druckluft oder mechanisches Strecken in ein geteiltes Formwerkzeug eingebracht und dort an die Kontur angepasst wird. Daneben kommen auch Thermoformverfahren zum Einsatz, bei denen vorgefertigte Platten oder Halbschalen aus thermoplastischem Material erwärmt und anschließend durch Vakuum, Druckluft oder mechanischen Kontakt verformt werden. Diese Verfahren sind weit verbreitet und werden insbesondere zur Herstellung von Hohlkörpern wie Flaschen, technischen Behältern, transparenten Abdeckungen, Lampenschirmen oder großflächigen Lichtkuppeln genutzt. Der eingesetzte Kunststoff wird dabei in der Regel vollständig plastifiziert oder zumindest bis in den thermoplastischen Bereich erwärmt, sodass eine dauerhafte Umformung in die gewünschte Endkontur möglich ist. Die Auswahl des geeigneten Verfahrens hängt dabei von der Bauteilgeometrie, den Anforderungen an Oberflächenqualität und Wandstärkenverteilung sowie vom verwendeten Werkstoff ab.

So offenbart beispielsweise die EP 1 727 661 B1 ein mehrstufiges Blasformverfahren mit Vor- und Endblasphase, wobei durch kontrollierte Druckprofile sowie Rückgewinnung der Blasluft eine erhöhte Energieeffizienz erreicht wird. Die DE 199 34 320 A1 beschreibt darüber hinaus die Verwendung von vorgewärmter Blasluft zur verbesserten Temperaturführung während der Formgebung.

Zur Herstellung optisch anspruchsvoller Teile wie Leuchtenabdeckungen werden häufig PMMA-Halbzeuge im Thermoformverfahren verarbeitet. Dabei ist eine gleichmäßige Erwärmung sowie eine schonende, spannungsarme Umformung entscheidend für die optische Qualität des Endprodukts. Verarbeitungshinweise, etwa von PLEXIGLAS^{®}-Herstellern, betonen die Bedeutung diffuser Luftführung, exakt temperierter Werkzeuge sowie abgestimmter Druckprofile, um Schlieren, Wanddickenvariationen oder Spannungsrisse zu vermeiden.

Typischerweise erfolgt die Formgebung durch Aufblasen in ein geteiltes Werkzeug unter Verwendung von Druckluft. Verfahren dieser Art sind beispielsweise in der CN 110281507 A oder in Anwendungen von Einstufen-Spritzblasmaschinen beschrieben, bei denen der Hohlkörper in einem formschließenden Werkzeug durch Luftdruck expandiert wird. Die Luftzufuhr erfolgt über geeignete Düsen oder Dornsysteme. Allerdings sind diese bekannten Verfahren oftmals energieintensiv, da das gesamte Hohlkörpermaterial vollständig auf Verarbeitungstemperatur gebracht werden muss. Ferner lassen sich durch die übliche Prozessführung mit einmaliger Druckbeaufschlagung komplexere Geometrien oder eine gleichmäßige Wandstärkenverteilung nur eingeschränkt realisieren.

Vor diesem Hintergrund liegt der Erfindung die Aufgabe zugrunde, ein Verfahren sowie eine Vorrichtung zur Verformung von thermoplastischen Hohlkörpern bereitzustellen, das eine präzise steuerbare und energieeffiziente Umformung ermöglicht und dabei insbesondere für die Herstellung lichttechnischer Abdeckungen geeignet ist.

Gelöst wird die Aufgabe durch die Merkmale des Anspruchs 1 und die des Anspruchs 10. Vorteilhafte Ausgestaltungen sind in den abhängigen Ansprüchen beschrieben.

Es wird Verfahren zur formgebenden Verarbeitung eines beidseitig offenen Hohlkörpers aus thermoplastischem Kunststoff bereitgestellt, das sich insbesondere zur Herstellung transparenter oder transluzenter Leuchtenabdeckungen eignet. Hierzu wird der Hohlkörper zunächst in ein geteiltes, schließbares Werkzeug eingelegt, dessen Innenkontur die gewünschte Außengeometrie des fertigen Bauteils definiert. Durch das Schließen des Werkzeugs wird der Hohlkörper formschlüssig fixiert, wobei die Werkzeughälften eine formgebende Kavität ausbilden. Die beiden offenen Enden des Hohlkörpers werden anschließend mit einem geschlossenen Prozesssystem verbunden, das zur gezielten thermischen und drucktechnischen Beeinflussung des Innenraums dient. In einem ersten Erwärmungsschritt wird der Hohlkörper zunächst auf eine Temperatur unterhalb der Plastifizierungstemperatur des verwendeten thermoplastischen Kunststoffs gebracht. Dieser Schritt dient der gleichmäßigen Vorerwärmung des Materials, ohne es bereits plastisch zu verformen. Der Systemdruck bleibt insbesondere niedrig. In einem nachfolgenden zweiten Erwärmungsschritt wird die Temperatur weiter erhöht, sodass der Kunststoff eine Temperatur oberhalb seiner Plastifizierungstemperatur erreicht und in einen plastisch verformbaren Zustand übergeht. Nach der vollständigen Plastifizierung erfolgt eine gezielte Druckerhöhung im Inneren des Hohlkörpers, wodurch sich dieser unter Wirkung des Innendrucks an die Innenkontur des Werkzeugs anlegt. Der Hohlkörper nimmt hierbei die gewünschte Bauteilgeometrie an. Nach erfolgtem Formgebungsprozess kann das Bauteil durch Abkühlen verfestigt und aus dem Werkzeug entnommen werden.

Durch die Kombination aus zweistufiger, thermisch schonender Erwärmung und kontrolliertem Druckaufbau innerhalb eines geschlossenen Prozesssystems wird eine besonders gleichmäßige Wandstärkenverteilung erreicht. Das Verfahren eignet sich daher besonders für optisch anspruchsvolle Anwendungen wie die Herstellung von Leuchtenabdeckungen aus PMMA oder anderen lichttechnisch geeigneten Kunststoffen, bei denen neben Maßhaltigkeit auch hohe Transparenz und Oberflächenqualität gefordert sind. Zudem erlaubt die modulare Kopplung des Hohlkörpers an das Prozesssystem eine hohe Flexibilität hinsichtlich der zu verarbeitenden Geometrien.

In einer bevorzugten Ausführungsform des Verfahrens wird für die Durchführung der beiden Erwärmungsschritte ein strömbares Medium als Wärmeträger verwendet, das durch den Innenraum des Hohlkörpers geleitet wird. Das strömende Medium sorgt für eine gleichmäßige Wärmeverteilung entlang der Innenwandung des Hohlkörpers und ermöglicht eine effektive und steuerbare Temperaturführung. Besonders geeignet ist hierbei die Verwendung von Luft als Wärmeträger, da diese einfach zu temperieren, gut regelbar und prozesstechnisch leicht handhabbar ist. Die Luft kann dabei gezielt vorgewärmt, beschleunigt und über geeignete Leitungen oder Kreislaufsysteme durch den Hohlkörper geführt werden, um sowohl die Vorerwärmung unterhalb als auch die Plastifizierung oberhalb der Plastifizierungstemperatur des Kunststoffs zu erreichen. Diese Art der Erwärmung ist insbesondere für lichttechnische Anwendungen vorteilhaft, da durch die indirekte, konvektive Wärmeübertragung thermische Spannungen minimiert und unerwünschte lokale Überhitzungen vermieden werden können. Die Verwendung eines strömbaren Mediums als Wärmeträger erlaubt zudem eine dynamische Steuerung des Temperaturprofils im Hohlkörper, wodurch das Verfahren für verschiedene Geometrien und Materialstärken anpassbar ist.

In einer weiteren bevorzugten Ausgestaltung wird das strömende Medium, insbesondere die zur Erwärmung eingesetzte Luft, innerhalb eines geschlossenen Prozesssystems in einem Kreislauf geführt. Das geschlossene System stellt sicher, dass die einmal aufgeheizte Luft nicht unkontrolliert entweicht, sondern gezielt umgewälzt und wiederverwendet werden kann. Auf diese Weise wird eine konstante und energieeffiziente Temperierung des Hohlkörpers ermöglicht. Zur Aufrechterhaltung der Luftzirkulation innerhalb dieses geschlossenen Kreislaufs ist das Prozesssystem mit einem Gebläse ausgestattet, das für eine kontinuierliche Umwälzung des Mediums sorgt. Das Gebläse gewährleistet, dass das strömende Medium gleichmäßig durch den Hohlkörper geleitet wird und somit in allen Bereichen des Innenraums eine homogene Wärmeverteilung erreicht wird.

In einer vorteilhaften Weiterbildung des Verfahrens wird der erste Erwärmungsschritt, bei dem der Hohlkörper auf eine Temperatur unterhalb der Plastifizierungstemperatur des Kunststoffs vorgewärmt wird, durch ein Wärmespeicherelement unterstützt. Das Wärmespeicherelement kann entweder passiv oder aktiv ausgeführt sein und dient dazu, dem strömbaren Medium, insbesondere der Luft, auf energetisch effiziente Weise Wärme zuzuführen. Hierdurch wird das Temperaturniveau im Prozesssystem stabilisiert und eine gleichmäßige Vorerwärmung des Hohlkörpers sichergestellt. Das Wärmespeicherelement kann beispielsweise als mit Luft durchströmter Festkörper ausgebildet sein, der zuvor aufgeheizt wurde und seine gespeicherte Wärme an das durchgeleitete Medium abgibt. Alternativ kann das Element aktiv beheizt sein, um eine gezielte Temperaturführung während der Vorerwärmungsphase zu ermöglichen. Der Einsatz eines solchen Wärmespeichers ermöglicht eine konstante, definierte Energiezufuhr in der frühen Prozessphase, wodurch der thermische Übergang des Kunststoffs in den plastifizierbaren Bereich kontrolliert vorbereitet wird. Dies trägt zur Reduktion von Temperaturgradienten und somit zur Vermeidung innerer Spannungen im Material bei - ein wesentlicher Vorteil bei der Herstellung optisch anspruchsvoller Bauteile wie Leuchtenabdeckungen.

Gemäß einer weiteren bevorzugten Ausführung des Verfahrens erfolgt der zweite Erwärmungsschritt, bei dem der Hohlkörper auf eine Temperatur oberhalb der Plastifizierungstemperatur des Kunststoffs erhitzt wird, unter Einsatz eines Heizregisters. Das Heizregister dient dabei als aktive Wärmeeinheit zur gezielten Anhebung der Temperatur des strömbaren Mediums, insbesondere der im geschlossenen Prozesssystem zirkulierenden Luft. Im Gegensatz zur vergleichsweise sanften und energetisch gepufferten Vorerwärmung mittels Wärmespeicher ermöglicht das Heizregister eine präzise steuerbare und schnelle Temperaturerhöhung, um das thermoplastische Material in einen plastisch verformbaren Zustand zu überführen. Die Temperatur des Heizregisters kann dabei abhängig von Material, Geometrie und Prozesszeit angepasst werden, um eine möglichst spannungsarme Plastifizierung mit gleichmäßiger Wärmeverteilung zu erreichen. Der Einsatz eines Heizregisters erlaubt insbesondere eine flexible Prozessführung, bei der die Intensität und Dauer der Plastifizierung gezielt geregelt werden können.

Es ist bevorzugt, dass die Temperatursteuerung während des ersten und/oder zweiten Erwärmungsschritts temperatur- und/oder zeitabhängig erfolgt. Hierdurch kann der thermische Verlauf im Hohlkörper besonders präzise auf die Materialeigenschaften des eingesetzten thermoplastischen Kunststoffs sowie auf die geometrischen Gegebenheiten des Werkstücks abgestimmt werden. Bei einer temperaturabhängigen Steuerung wird die jeweils aktuelle Mediumstemperatur kontinuierlich überwacht und geregelt, sodass definierte Temperaturniveaus gezielt angefahren und gehalten werden können. Dies ermöglicht eine reproduzierbare Vorerwärmung und Plastifizierung mit hoher Prozesssicherheit. Alternativ oder ergänzend kann die Steuerung zeitabhängig erfolgen, indem die Erwärmungsdauer exakt vorgegeben wird, was insbesondere bei bekannten Werkstoffparametern und standardisierten Geometrien eine effiziente und zyklusstabile Prozessführung erlaubt. Die temperatur- und/oder zeitabhängige Steuerung der Erwärmungsschritte trägt zur Vermeidung lokaler Überhitzungen oder unzureichender Plastifizierung bei.

In einer weiteren bevorzugten Ausgestaltung des Verfahrens wird der Innendruck im Hohlkörper über einen regelbaren Druckregler eingestellt. Der Druckregler ist dabei Bestandteil des geschlossenen Prozesssystems und ermöglicht eine gezielte Steuerung des Druckniveaus im Innenraum des Hohlkörpers während der Formgebung. Die Einstellung des Innendrucks erfolgt vorzugsweise in Abhängigkeit von der erreichten Werkstofftemperatur und dem gewünschten Formverlauf. Durch die Möglichkeit der fein abgestimmten Druckerhöhung nach dem zweiten Erwärmungsschritt kann der thermoplastisch verformbare Hohlkörper kontrolliert an die Innenkontur des geschlossenen Werkzeugs angelegt werden, wodurch eine gleichmäßige Wandstärkenverteilung und hohe Formgenauigkeit erreicht werden. Darüber hinaus können durch eine geeignete Druckführung mögliche Materialverwerfungen oder Faltenbildungen während der Expansion des Hohlkörpers vermieden werden.

In einer bevorzugten Ausführung wird als thermoplastischer Kunststoff Polymethylmethacrylat (PMMA) verwendet. PMMA zeichnet sich durch eine hohe Lichttransmission, gute optische Klarheit sowie eine vergleichsweise geringe thermische Ausdehnung aus und eignet sich daher besonders für die Herstellung transparenter oder transluzenter Leuchtenabdeckungen. Aufgrund seiner thermoplastischen Eigenschaften kann PMMA unter kontrollierter Erwärmung plastifiziert und anschließend durch Innendruck formgenau an eine Werkzeugkontur angepasst werden, ohne dabei an optischer Qualität zu verlieren. Alternativ können auch andere geeignete thermoplastische Kunststoffe eingesetzt werden, die eine vergleichbare Verformbarkeit und optische Eignung aufweisen. Hierzu zählen insbesondere Polycarbonat (PC), das sich durch hohe Schlagzähigkeit und Temperaturbeständigkeit auszeichnet, sowie Styrol-Acrylnitril (SAN) oder Cyclo-Olefin-Copolymere (COC), die für Anwendungen mit hohen Anforderungen an Transparenz und Maßhaltigkeit verwendet werden. Auch transluzente oder eingefärbte Varianten dieser Materialien lassen sich im Rahmen des erfindungsgemäßen Verfahrens verarbeiten, sofern sie eine definierbare Plastifizierungstemperatur aufweisen und sich unter kontrollierten Bedingungen formgebend verformen lassen. Durch die Materialauswahl lässt sich das Verfahren gezielt an unterschiedliche lichttechnische Anforderungen anpassen, etwa hinsichtlich Lichtdurchlässigkeit, Streuung, UV-Beständigkeit oder mechanischer Festigkeit.

Die Erfindung betrifft ferner ein System zur Verformung eines beidseitig offenen Hohlkörpers aus thermoplastischem Kunststoff und ist insbesondere zur Durchführung des zuvor beschriebenen Verfahrens geeignet. Es umfasst ein geteiltes, schließbares Werkzeug, das zur formschlüssigen Aufnahme des Hohlkörpers ausgebildet ist. Die Innenkontur des Werkzeugs entspricht dabei der gewünschten Außengeometrie des herzustellenden Bauteils, sodass der Hohlkörper nach erfolgter Formgebung die Zielkontur vollständig annimmt. Zur prozessseitigen Anbindung des Hohlkörpers ist das System mit einer Anschlussvorrichtung versehen, die beide offenen Enden des Hohlkörpers mit einem geschlossenen Prozesssystem verbindet. Dieses Prozesssystem dient der gezielten thermischen Konditionierung und Druckbeaufschlagung des Innenraums des Hohlkörpers.

Zur Durchführung der zweistufigen Erwärmung des Hohlkörpers umfasst das System eine entsprechend ausgelegte Erwärmungseinrichtung. Diese ist eingerichtet, den Hohlkörper in einem ersten Erwärmungsschritt auf eine Temperatur unterhalb der Plastifizierungstemperatur des verwendeten thermoplastischen Kunststoffs zu bringen, um das Material gleichmäßig vorzukonditionieren. In einem zweiten Erwärmungsschritt wird die Temperatur dann auf einen Wert oberhalb der Plastifizierungstemperatur angehoben, sodass der Kunststoff in einen verformbaren Zustand übergeht.

Eine im System integrierte Druckeinrichtung ist dafür vorgesehen, nach der Plastifizierung einen kontrollierten Innendruck im Hohlkörper zu erzeugen. Dieser Druck bewirkt, dass sich die Wandung des Hohlkörpers gleichmäßig an die Innenkontur des Werkzeugs anlegt, wodurch das Bauteil die vorgegebene Geometrie annimmt.

In einer bevorzugten Ausgestaltung des Systems weist die Erwärmungseinrichtung eine Führung für ein strömbares Medium auf, das als Wärmeträger dient. Das Medium wird gezielt durch das geschlossene Prozesssystem geleitet und wirkt dabei auf die Innenwandung des Hohlkörpers ein, um diesen thermisch zu konditionieren. Als besonders geeignet hat sich hierbei Luft erwiesen, da sie als Wärmeträger kostengünstig, gut regulierbar und einfach in den Kreislauf integrierbar ist. Die Ausführung der Erwärmungseinrichtung als strömungsgeführtes System ermöglicht eine gleichmäßige und großflächige Wärmeübertragung entlang des gesamten Innenvolumens des Hohlkörpers. Dabei kann das strömende Medium sowohl im ersten als auch im zweiten Erwärmungsschritt zum Einsatz kommen. Die Verwendung eines strömbaren Mediums erlaubt außerdem eine flexible Anpassung an unterschiedliche Geometrien und Wandstärken des Hohlkörpers, da sich das Medium gleichmäßig im Innenraum verteilt und so eine homogene Temperaturverteilung unterstützt.

In einer weiteren bevorzugten Ausführungsform des Systems ist vorgesehen, dass das strömende Medium, insbesondere die erwärmte Luft, in einem geschlossenen Kreislauf geführt wird, der auch den Hohlkörper umfasst. Der geschlossene Kreislauf ist so konzipiert, dass das Medium nach Durchströmung des Hohlkörpers wieder in das Prozesssystem zurückgeführt und dort erneut erwärmt oder konditioniert werden kann.

Die geschlossene Kreislaufführung bietet darüber hinaus den Vorteil, dass das Medium gezielt gefiltert, getrocknet oder von Verunreinigungen befreit werden kann, bevor es erneut durch den Hohlkörper geführt wird. Dies ist insbesondere dann von Bedeutung, wenn eine hohe optische Qualität des fertigen Werkstücks gefordert ist, wie etwa bei transparenten Leuchtenabdeckungen.

Der geschlossene Kreislauf kann beispielsweise durch ein System aus temperaturbeständigen Rohr- oder Schlauchleitungen realisiert sein, das das strömende Medium nacheinander durch ein Wärmespeicherelement, ein Heizregister, den Hohlkörper und eine Umwälzeinrichtung, insbesondere ein Gebläse, führt. Dabei kann das Medium vollständig innerhalb des Systems zirkulieren, ohne mit der Umgebungsluft in Kontakt zu treten. Alternativ kann der Kreislauf auch in eine Prozesskammer integriert sein, innerhalb derer das Medium über Umlenkeinrichtungen und definierte Strömungspfade geleitet wird. Der Rücklauf des Mediums erfolgt bevorzugt unmittelbar zum Wärmespeicherelement oder Gebläse, sodass eine kontinuierliche Zirkulation ermöglicht wird.

In einer weiteren bevorzugten Ausgestaltung umfasst die Erwärmungseinrichtung ein Wärmespeicherelement, das zur Durchführung des ersten Erwärmungsschritts vorgesehen ist. Das Wärmespeicherelement dient dazu, dem strömbaren Medium - insbesondere Luft - thermische Energie zuzuführen, um den Hohlkörper zunächst auf eine Temperatur unterhalb der Plastifizierungstemperatur des Kunststoffs zu erwärmen. Das Wärmespeicherelement kann dabei als passiver oder aktiv beheizter Körper ausgeführt sein, der im geschlossenen Kreislauf des Mediums angeordnet ist. Bevorzugt handelt es sich um einen wärmeleitenden Festkörper, der vorab auf ein definiertes Temperaturniveau gebracht wird und beim Durchströmen des Mediums Wärme überträgt. Eine derartige Ausführung ermöglicht eine energieeffiziente Vorerwärmung des Hohlkörpers bei gleichzeitig hoher Temperaturstabilität im ersten Erwärmungsschritt. Durch den Einsatz eines Wärmespeicherelements lässt sich das Temperaturprofil des Mediums im Prozesssystem gezielt beeinflussen, wodurch eine gleichmäßige, materialschonende Vorerwärmung erreicht wird.

In einer vorteilhaften Alternative ist das Wärmespeicherelement als Rohrbündelspeicher ausgebildet. Ein solcher Rohrbündelspeicher umfasst mehrere parallel verlaufende, wärmeleitende Rohre, die von einem Mantel umgeben sind. Das strömende Medium, insbesondere Luft, wird durch den Rohrraum oder den Mantelraum geführt, während das Wärmespeichermaterial - beispielsweise ein elektrisch oder extern beheizbares Metallblocksystem - thermische Energie speichert und an das durchströmende Medium abgibt. Die Rohrbündelbauweise erlaubt eine große Wärmeübertragungsfläche auf engem Raum und sorgt für eine homogene Temperierung des Mediums über die gesamte Querschnittsfläche. Je nach Ausführung kann der Speicher passiv durch Vorbeheizung oder aktiv durch integrierte Heizelemente betrieben werden. Das System kann dabei so ausgelegt sein, dass das Medium mit kontrollierter Strömungsgeschwindigkeit durch das Rohrbündel geführt wird, um die gewünschte Temperatur für den ersten Erwärmungsschritt sicherzustellen. Technisch lässt sich der Rohrbündelspeicher in den geschlossenen Kreislauf integrieren, wobei er zwischen dem Gebläse und dem Hohlkörper positioniert wird. Optional können Temperatursensoren am Ein- und Austritt vorgesehen sein, um die Regelung der gespeicherten Wärme zu optimieren.

Weiterhin ist vorteilhafterweise vorgesehen, dass die Erwärmungseinrichtung als ein Heizregister ausgestaltet ist, das zur Durchführung des zweiten Erwärmungsschritts vorgesehen ist. Das Heizregister ist dazu eingerichtet, das strömende Medium - insbesondere Luft - gezielt auf eine Temperatur oberhalb der Plastifizierungstemperatur des eingesetzten thermoplastischen Kunststoffs zu erhitzen, um den Hohlkörper vollständig plastifizierbar zu machen. Technisch kann das Heizregister beispielsweise als elektrisch beheizter Rohrabschnitt, als Durchlauferhitzer mit integrierten Heizelementen oder als Rippen- bzw. Lamellenregister mit großflächigem Wärmeübertragungsbereich ausgeführt sein. Es ist im Strömungsverlauf des geschlossenen Prozesssystems so positioniert, dass das Medium nach Durchlauf des Wärmespeicherelements im ersten Erwärmungsschritt unmittelbar in das Heizregister eintritt und dort auf das erforderliche Endtemperaturniveau gebracht wird. Durch die gezielte Positionierung und Regelung des Heizregisters kann die Temperaturführung im zweiten Erwärmungsschritt exakt gesteuert werden.

In einer bevorzugten Weiterbildung weist die Anschlussvorrichtung formschlüssige Anschlussmittel auf, die zur prozesssicheren Verbindung der beiden offenen Enden des Hohlkörpers mit dem geschlossenen Prozesssystem vorgesehen sind. Diese Anschlussmittel dienen insbesondere der zentrierten Positionierung und dichten Ankopplung des Hohlkörpers an das System zur Durchführung der Erwärmungs- und Formgebungsschritte. Bevorzugt sind die Anschlussmittel als kegelförmige Passstücke ausgebildet, die sich beim Einführen in die Hohlkörperenden selbstzentrierend positionieren und durch ihren Konus formschlüssig anliegen. Zur Abdichtung kann zusätzlich ein elastisches Dichtelement - beispielsweise ein O-Ring - zwischen dem Passstück und der Innenwand des Hohlkörpers vorgesehen sein. Alternativ können auch andere Ausführungen eingesetzt werden, etwa Spannbacken, Klemmringe, Bajonettverschlüsse, Flanschsysteme oder Steckverbindungen mit Dichtungselementen, abhängig von der Geometrie des Hohlkörpers und den Anforderungen an Druckdichtheit und Reproduzierbarkeit.

Durch die Verwendung formschlüssiger Anschlussmittel wird eine zuverlässige Verbindung mit minimalem Montageaufwand ermöglicht, was insbesondere bei wechselnden Bauteilgeometrien oder automatisierten Prozessen von Vorteil ist. Die zentrische Ausrichtung der Passstücke trägt zudem zur gleichmäßigen Strömungsverteilung und Druckführung im Hohlkörper bei, was sich positiv auf die Formgenauigkeit des Bauteils auswirkt.

Weitere vorteilhafte Ausgestaltungen werden anhand von in der Zeichnung dargestellten Ausführungsbeispielen näher erläutert.

Es zeigen:
- Fig. 1: eine perspektivische Darstellung eines geteilten Werkzeugs,
- Fig. 2: eine geöffnete Werkzeughälfte mit Hohlkörper und
- Fig. 3: eine schematische Darstellung des erfindungsgemäßen Systems zur Verformung eines thermoplastischen Hohlkörpers.

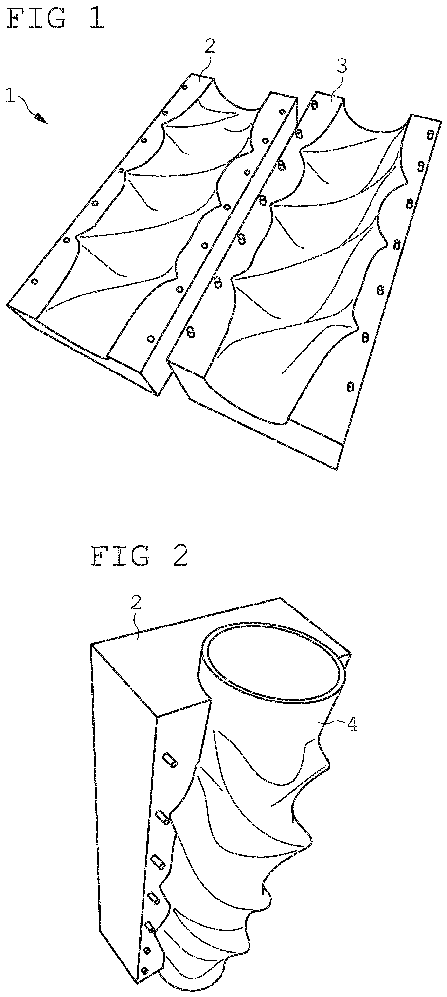

Fig. 1 zeigt eine perspektivische Darstellung eines geteilten Werkzeugs 1, bestehend aus zwei einander zugeordneten Werkzeughälften 2, 3. Die Werkzeughälften 2, 3 sind jeweils so geformt, dass sie gemeinsam eine formgebende Innenkontur für die Herstellung eines bauteilspezifischen Umformteils bilden. Das Werkzeug 1 kann geöffnet und geschlossen werden, wobei die beiden Hälften 2, 3 über geeignete Führungselemente und eine Spannvorrichtung (nicht dargestellt) exakt zueinander ausgerichtet sind. In geschlossenem Zustand bilden die Innenflächen der Hälften eine kavitätenartige Form, die der späteren Leuchtenabdeckung entspricht.

Fig. 2 zeigt eine der beiden Werkzeughälften 2, 3 im geöffneten Zustand. In der Innenkontur der Werkzeughälfte 2, 3 ist ein thermoplastischer Hohlkörper 4 eingelegt, der im dargestellten Beispiel als vorgeformte Leuchtenabdeckung ausgebildet ist. Der Hohlkörper 4 liegt an der formgebenden Kontur der Werkzeughälfte 2, 3 an, wobei die zweite Werkzeughälfte 2, 3 (nicht gezeigt) zur vollständigen Umschließung des Hohlkörpers 4 ergänzt wird. Die offenen Enden des Hohlkörpers 4 sind in dieser Ansicht nicht dargestellt, können jedoch über geeignete Anschlussvorrichtungen mit dem Prozesssystem verbunden werden. Die Darstellung verdeutlicht die geometrische Anpassung des Hohlkörpers 4 an das Werkzeug 1 und seine Positionierung.

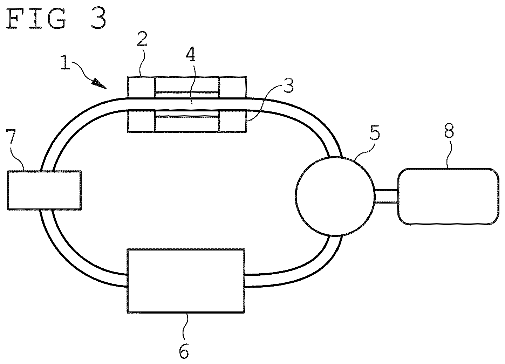

Fig. 3 zeigt eine schematische Darstellung des erfindungsgemäßen Systems zur Verformung eines thermoplastischen Hohlkörpers. Die Darstellung umfasst Funktionseinheiten, die für die Durchführung des Verfahrens vorteilhaft sind. Selbstverständlich kann das System durch weitere Einheiten ergänzt werden. Im Zentrum befindet sich ein geteiltes, schließbares Werkzeug 1, das aus zwei Werkzeughälften 2, 3 besteht und in das ein beidseitig offener Hohlkörper 4 eingelegt ist. Die Innenkontur des Werkzeugs 1 entspricht der späteren Bauteilgeometrie, beispielsweise einer Leuchtenabdeckung.

Der Hohlkörper 4 ist über eine nicht gezeigte Anschlussvorrichtung mit einem geschlossenen Prozesssystem verbunden, das zur Umwälzung, Erwärmung und Druckbeaufschlagung eines strömbaren Mediums dient. Das Prozesssystem wird durch eine Linie schematisch angedeutet und umfasst ein Gebläse 5, das zur Umwälzung des Mediums, z. B. Luft, innerhalb eines geschlossenen Kreislaufs vorgesehen ist. In Strömungsrichtung nachgeschaltet ist ein Wärmespeicher 6, der den ersten Erwärmungsschritt unterhalb der Plastifizierungstemperatur des Kunststoffs unterstützt. Daran anschließend ist ein Heizregister 7 angeordnet, das den zweiten Erwärmungsschritt bei einer Temperatur oberhalb der Plastifizierungstemperatur realisiert.

Zur Drucksteuerung ist ein Druckregler 8 vorgesehen, der den Innendruck im Hohlkörper 4 gezielt erhöht, sodass sich dieser im plastifizierten Zustand an die Innenkontur des Werkzeugs 1 anlegt. Das Zusammenspiel der genannten Komponenten ermöglicht eine präzise thermische Konditionierung und formgebende Verformung des Hohlkörpers 4 innerhalb des geschlossenen Systems.

### Bezugszeichenliste

- 1.: Werkzeug
- 2.: Erste Werkzeughälfte
- 3.: Zweite Werkzeughälfte
- 4.: Hohlkörper
- 5.: Gebläse
- 6.: Wärmespeicher
- 7.: Heizregister
- 8.: Druckregler

## Patentansprüche

1. Verfahren zum Verformen eines beidseitig offenen, Hohlkörpers (4) aus thermoplastischem Kunststoff, wobei
a) der Hohlkörper (4) in ein geteiltes, schließbares Werkzeug (1) eingelegt wird, das die Außengeometrie des zu formenden Bauteils vorgibt,
b) die Enden des Hohlkörpers (4) mit einem geschlossenen Prozesssystem verbunden werden,
c) der Hohlkörper (4) in einem ersten Erwärmungsschritt auf eine Temperatur unterhalb einer Plastifizierungstemperatur des Kunststoffs gebracht wird,
d) der Hohlkörper (4) in einem zweiten Erwärmungsschritt auf eine Temperatur oberhalb der Plastifizierungstemperatur des Kunststoffs erhitzt wird,
e) nach erfolgter Plastifizierung der Innendruck im Hohlkörper (4) erhöht wird, sodass sich dieser an die Innenkontur des Werkzeugs (1) anlegt und verformt.

2. Verfahren nach Anspruch 1, **dadurch gekennzeichnet, dass** als Wärmeträger für die Erwärmungsschritte ein strömbares Medium verwendet wird, insbesondere Luft.

3. Verfahren nach Anspruch 2, **dadurch gekennzeichnet, dass** das strömbare Medium innerhalb des geschlossenen Prozesssystems in einem Kreislauf geführt wird, der ein Gebläse (5) zur Umwälzung umfasst.

4. Verfahren nach einem der vorhergehenden Ansprüche,
**dadurch gekennzeichnet, dass** der erste Erwärmungsschritt durch ein passives oder aktives Wärmespeicherelement unterstützt wird, insbesondere durch einen Wärmespeicher (6).

5. Verfahren nach einem der vorhergehenden Ansprüche, **dadurch gekennzeichnet, dass** der zweite Erwärmungsschritt durch ein Heizregister (7) erfolgt.

6. Verfahren nach einem der vorhergehenden Ansprüche, **dadurch gekennzeichnet, dass** die Temperatursteuerung während dem ersten und/oder zweiten Erwärmungsschritt temperatur- und/oder zeitabhängig erfolgt.

7. Verfahren nach einem der vorhergehenden Ansprüche, **dadurch gekennzeichnet, dass** der Innendruck im Hohlkörper (4) über einen regelbaren Druckregler (8) eingestellt wird.

8. Verfahren nach einem der vorhergehenden Ansprüche, **dadurch gekennzeichnet, dass** der Hohlkörper (4) vor dem Einlegen in das Werkzeug (1) in einer externen Wärmequelle auf eine Temperatur unterhalb der Plastifizierungstemperatur des Kunststoffs vorgewärmt wird.

9. Verfahren nach einem der vorhergehenden Ansprüche, **dadurch gekennzeichnet, dass** als thermoplastischer Kunststoff Polymethylmethacrylat (PMMA) verwendet wird.

10. System zur Verformung eines beidseitig offenen Hohlkörpers (4) aus thermoplastischem Kunststoff, umfassend ein geteiltes, schließbares Werkzeug (1), das zur Aufnahme des Hohlkörpers (4) eingerichtet ist und dessen Innenkontur eine Außengeometrie des zu formenden Bauteils vorgibt,
eine Anschlussvorrichtung, die zur Verbindung beider Enden des Hohlkörpers (4) mit einem geschlossenen Prozesssystem vorgesehen ist,
eine Erwärmungseinrichtung, die eingerichtet ist, den Hohlkörper (4) in einem ersten Erwärmungsschritt auf eine Temperatur unterhalb und in einem zweiten Erwärmungsschritt auf eine Temperatur oberhalb der Plastifizierungstemperatur des Kunststoffs zu bringen, eine Druckeinrichtung, die zur Erzeugung eines Innendrucks im Hohlkörper (4) vorgesehen ist, sodass sich dieser an die Innenkontur des Werkzeugs (1) anlegt.

11. System nach Anspruch 10, **dadurch gekennzeichnet, dass** die Erwärmungseinrichtung eine Führung für ein strömbares Medium aufweist, das als Wärmeträger dient, insbesondere Luft.

12. System nach Anspruch 10 oder 11, **dadurch gekennzeichnet, dass** das strömbare Medium in einem geschlossenen Kreislauf durch den Hohlkörper (4) geführt wird.

13. System nach einem der Ansprüche 10 bis 12, **dadurch gekennzeichnet, dass** die Erwärmungseinrichtung ein Wärmespeicherelement (6) zur Durchführung des ersten Erwärmungsschritts umfasst.

14. System nach einem der Ansprüche 10 bis 13, **dadurch gekennzeichnet, dass** das Wärmespeicherelement (6) als Rohrbündelspeicher ausgebildet ist.

15. System nach einem der Ansprüche 10 bis 14, **dadurch gekennzeichnet, dass** die Erwärmungseinrichtung ein Heizregister (7) zur Durchführung des zweiten Erwärmungsschritts umfasst.

16. System nach einem der Ansprüche 10 bis 15, **dadurch gekennzeichnet, dass** die Anschlussvorrichtung formschlüssige Anschlussmittel aufweist, insbesondere kegelförmige Passstücke.
